# EUROPEAN PATENT APPLICATION

(11) **EP 4 353 397 A1**
(43) Date of publication of application: **17.04.2024**
(21) Application number: 22845675.2
(22) Date of filing: 28.04.2022
(51) Int. Cl.: B23K 26/16

(54) **LASER PROCESSING DEVICE AND LASER PROCESSING METHOD**

(30) Priority: 21.07.2021 JP 2021120919
(71) Applicant: NIPPON STEEL CORPORATION, Chiyoda-ku Tokyo 100-8071 (JP)
(72) Inventor: YAMADA, Yoshihiro, Tokyo 100-8071 (JP); IMAI, Takeshi, Tokyo 100-8071 (JP); YAJIMA, Dairi, Tokyo 100-8071 (JP); HAMAMURA, Hideyuki, Tokyo 100-8071 (JP); HIROTA, Yoshiaki, Tokyo 100-8071 (JP)
(74) Representative: Vossius & Partner Patentanwälte Rechtsanwälte mbB
(86) International application number: PCT/JP2022/019419
(87) International publication number: WO 2023/002736

(57) **Abstract**

A laser processing device includes: a laser light source unit that irradiates, with laser light, a surface of a steel sheet conveyed in a predetermined conveyance direction; a first nozzle that injects gas toward an irradiation site of the laser light, parallel to an optical axis direction of the laser light; and a dust collection mechanism unit that is provided only at one of an upstream side or a downstream side of the irradiation site, in the conveyance direction, and that collects, from a dust collection port, laser sputter generated from the irradiation site.

## Description

### Technical Field

The present disclosure relates to a laser processing device and a laser processing method.

### Background Art

For example, as in magnetic domain control processing of an oriented electromagnetic steel sheet disclosed in Japanese Patent Application Laid-Open (JP-A) No. S57-203720 below, in the steel industry, a surface of a steel sheet conveyed in a predetermined conveyance direction may be irradiated with laser light to perform some processing on the surface of the steel sheet. Dust called laser sputter is generated from the surface of the steel sheet with the irradiation of the laser light. When the generated laser sputter adheres to the surface of the steel sheet, the performance of the steel sheet may be adversely affected. For this reason, it is required to remove the generated laser sputter from the periphery of the steel sheet. Therefore, a technique for removing the laser sputter from the periphery of the steel sheet has been proposed.

For example, Japanese National-Phase Publication (JP-A) No. 2019-509394 below discloses a device including laser irradiation equipment for forming a groove on a surface of a steel sheet, an air knife for removing molten iron remaining inside the groove formed on the surface of the steel sheet, and a dust collecting hood for sucking and removing fumes and the molten iron.

Furthermore, Korean Patent Application Laid-Open (KR-A) No. 170011860 and Korean Patent Publication (KR-B1) No. 001626601 disclose a laser processing device including an air knife in which a discharge jet blows off a melt inside a groove of a processing unit that is a laser irradiation site on a surface of a steel sheet. The discharge jet of the air knife, i.e. the flow of injected air, arrives at the groove in the surface of the steel sheet.

Furthermore, Japanese National-Phase Publication No. 2020-138227, Japanese National-Phase Publication No. S58-187290, and Chinese Utility Model Application Laid-Open (CN-U) No. 202226886 disclose a laser processing device including an air nozzle in which a discharge jet is injected in a direction different from an optical axis of laser light, that is, in a direction intersecting the optical axis. According to the disclosed air nozzle, the injected air does not arrive at an irradiation site of the laser, and sputter is prevented from adhering to an emission unit of the laser light.
Patent Literature 1: Japanese Patent Application Laid-Open (JP-A) No. S57-203720
Patent Literature 2: Japanese National-Phase Publication (JP-A) No. 2019-509394
Patent Literature 3: Korean Patent Application Laid-Open (KR-A) No. 170011860
Patent Literature 4: Korean Patent Publication (KR-B1) No. 001626601
Patent Literature 5: Japanese National-Phase Publication (JP-A) No. 2020-138227
Patent Literature 6: Japanese National-Phase Publication (JP-A) No. S58-187290
Patent Literature 7: Chinese Utility Model Application Laid-Open (CN-U) No. 202226886

### SUMMARY OF INVENTION

### Technical Problem

However, as a result of verification of the device for dust collection as disclosed in Japanese National-Phase Publication (JP-A) No. 2019-509394 by the present disclosers, dust collection efficiency of laser sputter is not sufficient. Therefore, it has become clear that the periphery of a laser irradiation facility is contaminated by the laser sputter that has not been removed, and maintenance of the laser irradiation facility takes time and effort.

Furthermore, in consideration of the next top runner regulation for industrial machines and the like, in the magnetic domain control processing of the oriented electromagnetic steel sheet, in order to further reduce an iron loss, it is required to further increase the laser power of the laser to be irradiated, for example, to about 1 to 3 kW. With this requirement, it is estimated that an amount of generated laser sputter also increases. In order to cope with an increase in laser sputter, further improvement in dust collection efficiency is desired.

Furthermore, in the case of the device using the air knife as in Korean Patent Application Laid-Open (KR-A) No. 170011860 and Korean Patent Publication (KR-B1) No. 001626601, the flow of air for collecting dust is disturbed, and as a result, blown laser sputter adheres to the laser processing device. Furthermore, even in the device using the air nozzle as in Japanese National-Phase Publication (JP-A) No. 2020-138227, Japanese National-Phase Publication (JP-A) No. S58-187290, and Chinese Utility Model Application Laid-Open (CN-U) No. 202226886, in a case where the flow of the injected air is different from the optical axis of the laser light, the laser sputter is likely to adhere to the laser processing device.

An object of the present disclosure is to provide a laser processing device and a laser processing method capable of more efficiently collecting dust from laser sputter generated by laser light irradiation.

### Solution to Problem

In order to solve the above problems, the present disclosers conducted intensive studies on an air knife as disclosed in Japanese National-Phase Publication (JP-A) No. 2019-509394. As a result, the present disclosers have found that using an air knife that creates an air flow to such an extent that laser sputter remaining inside the groove formed on the surface of the steel sheet can be scraped off is one of factors that conversely reduce the dust collection efficiency of the laser sputter.

In addition, in the device disclosed in Japanese National-Phase Publication (JP-A) No. 2019-509394, the generated laser sputter is sucked by two dust collecting hoods disposed in front of and behind an irradiation site (that is, an irradiation position) of laser light. However, when the present disclosers simulated the flow of air in the vicinity of the irradiation site of the laser light, the present disclosers have found that, conversely, a blank portion of the flow of air, that is, a stagnant region of the flow is generated in the vicinity of the irradiation site of the laser light by the suction by the two dust collecting hoods, and the dust collection efficiency is lowered.

In order to solve the above problem, a laser processing device according to a first aspect of the present disclosure includes: a laser light source unit that irradiates, with laser light, a surface of a steel sheet conveyed in a predetermined conveyance direction; a first nozzle that injects gas toward an irradiation site of the laser light, parallel to an optical axis direction of the laser light; and a dust collection mechanism unit that is provided only at one of an upstream side or a downstream side of the irradiation site, in the conveyance direction, and that collects, from a dust collection port, laser sputter generated from the irradiation site.

In order to solve the above problem, a laser processing method according to a second aspect of the present disclosure includes: irradiating, with laser light from a laser light source unit, a surface of a steel sheet conveyed in a predetermined conveyance direction, and injecting gas from a first nozzle toward an irradiation site of the laser light, parallel to an optical axis direction of the laser light; and collecting laser sputter generated from the irradiation site from a dust collection port of a dust collection mechanism unit provided only at one of an upstream side or a downstream side of the irradiation site, in the conveyance direction.

According to the present disclosure, it is possible to more efficiently collect laser sputter generated by laser light irradiation.

### BRIEF DESCRIPTION OF DRAWINGS

Fig. 1A is a side view schematically illustrating an example of a configuration of a laser processing device according to an embodiment of the present disclosure.
Fig. 1B is a side view schematically illustrating an example of a configuration of the laser processing device according to the present embodiment.
Fig. 2 is a side view illustrating a positional relationship of a dust collection mechanism unit in the laser processing device according to the present embodiment.
Fig. 3 is a side view extracting and schematically illustrating a part of movement of dry air and movement of laser sputter of the laser processing device according to the present embodiment.
Fig. 4 is a side view extracting and schematically illustrating a part of movement of dry air and movement of laser sputter of a laser processing device according to a first comparative example.
Fig. 5 is a side view extracting and schematically illustrating a part of movement of dry air and movement of laser sputter of a laser processing device according to a second comparative example.
Fig. 6 is a side view extracting and schematically illustrating a part of movement of dry air and movement of laser sputter of a laser processing device according to a third comparative example.
Fig. 7A is an explanatory view illustrating a shape of a dust collection mechanism unit in the laser processing device according to the present embodiment.
Fig. 7B is an explanatory view illustrating the shape of the dust collection mechanism unit in the laser processing device according to the present embodiment.
Fig. 7C is an explanatory view illustrating the shape of the dust collection mechanism unit in the laser processing device according to the present embodiment.
Fig. 8 is an explanatory view illustrating the dust collection mechanism unit in the laser processing device according to the present embodiment.
Fig. 9A is a side view schematically illustrating a modified example of the configuration of the laser processing device according to the present embodiment.
Fig. 9B is a side view schematically illustrating a modified example of the configuration of the laser processing device according to the present embodiment.
Fig. 10 is a side view schematically illustrating a modified example of the configuration of the laser processing device according to the present embodiment.
Fig. 11A is a side view schematically illustrating a modified example of the configuration of the laser processing device according to the present embodiment.
Fig. 11B is a side view schematically illustrating a modified example of the configuration of the laser processing device according to the present embodiment.
Fig. 12 is a side view schematically illustrating a configuration of a laser processing device corresponding to a fourth comparative example of the present disclosure.
Fig. 13A is a graph for explaining an example of the present disclosure.
Fig. 13B is a graph for explaining an example of the present disclosure.
Fig. 14A is a graph for explaining an example of the present disclosure.
Fig. 14B is a graph for explaining an example of the present disclosure.

### DESCRIPTION OF EMBODIMENTS

Hereinafter, preferred embodiments of the present disclosure will be described in detail with reference to the accompanying drawings. Note that, in the present specification and the drawings, components having substantially the same functional configuration are denoted by the same reference signs, and redundant description is omitted.

As described above, the present disclosers conducted intensive studies on the device described in Japanese National-Phase Publication (JP-A) No. 2019-509394. As a result, it has become clear that the use of an air knife as used in Japanese National-Phase Publication (JP-A) No. 2019-509394 is conversely one of the factors that lower the dust collection efficiency of laser sputter. That is, the air knife generates a strong air flow of, for example, 50 m or more per second so that the laser sputter remaining inside the groove formed on the surface of the steel sheet can be scraped out. It has been found that the strong air flow is always generated, so that the air flow for suction by the two dust collecting hoods disposed before and after the irradiation site of the laser light is disturbed, and the dust collection efficiency of the laser sputter is lowered.

Furthermore, the flow of air in the vicinity of the irradiation site of the laser light was simulated for the device disclosed in Japanese National-Phase Publication (JP-A) No. 2019-509394. As a result, it has been found that, conversely, a blank portion of the air flow, that is, a stagnant region of the flow is generated in the vicinity of the irradiation site of the laser light by the suction by the two dust collecting hoods, and the dust collection efficiency is lowered.

Based on the above findings, the present disclosers conducted intensive studies. As a result, it has been conceived that it is possible to further improve the dust collection efficiency of laser sputter by controlling the air flow in the vicinity of the irradiation site of the laser light to a more appropriate state without using an air knife that generates a strong air flow.

A laser processing device and a laser processing method according to an embodiment of the present disclosure completed based on such knowledge will be described in detail below.

### (Laser processing device)

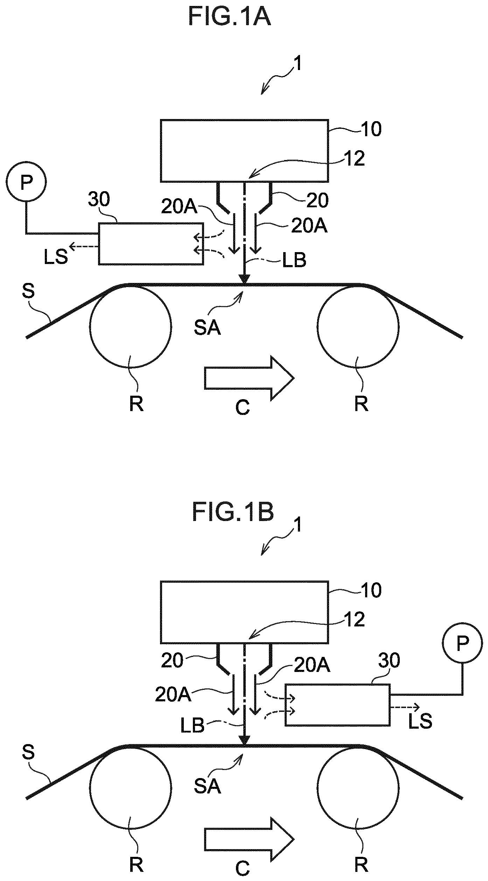

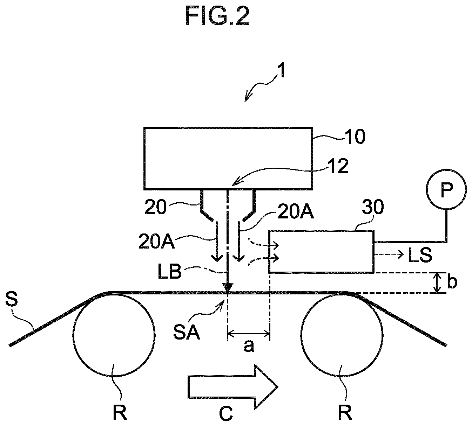

Hereinafter, a laser processing device according to an embodiment of the present disclosure will be described in detail with reference to Figs. 1A to 11B. Figs. 1A and 1B are side views schematically illustrating an example of a configuration of a laser processing device according to the present embodiment. Fig. 2 is a side view illustrating a positional relationship of a dust collection mechanism unit in the laser processing device according to the present embodiment.

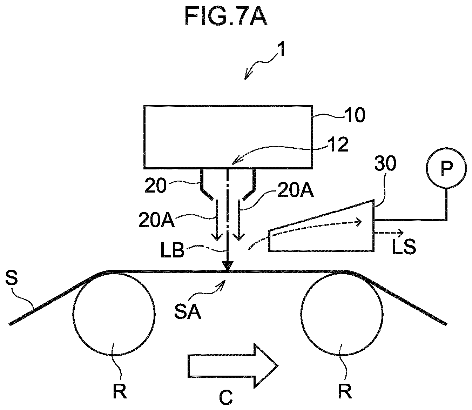

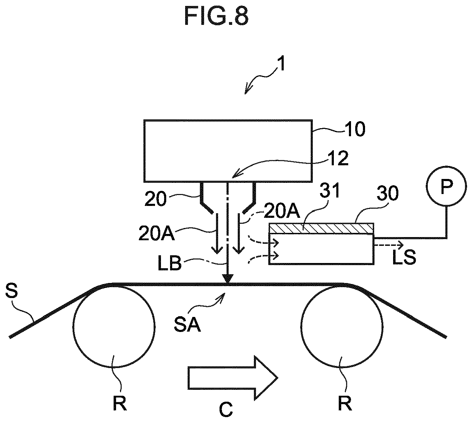

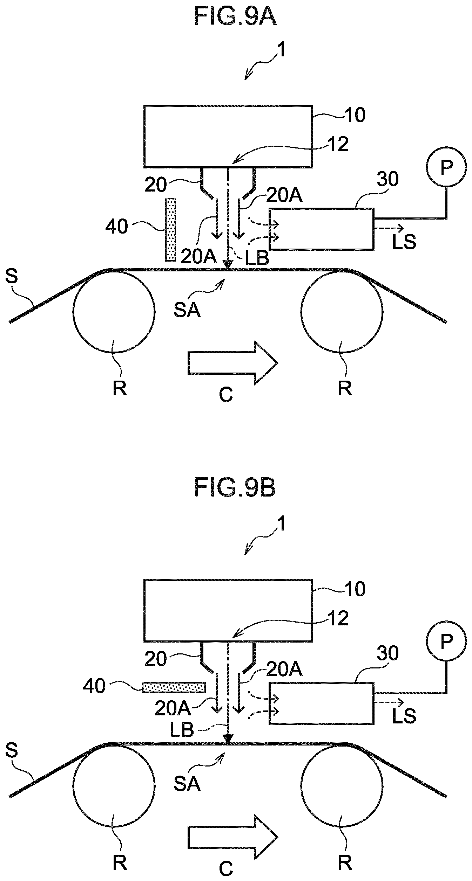

Figs. 7A to 7C are side views illustrating the shape of the dust collection mechanism unit in the laser processing device according to the present embodiment. Fig. 8 is a side view illustrating the dust collection mechanism unit in the laser processing device according to the present embodiment. Figs. 9A to 11B are side views schematically illustrating a modified example of the configuration of the laser processing device according to the present embodiment.

The laser processing device according to the present embodiment is a device that performs processing of forming a groove by irradiating a surface of a steel sheet with laser light, and is a device that collects laser sputter, which is dust generated from an irradiation site of the laser light due to the irradiated laser light. In the present disclosure, the "laser processing device" can be regarded as a "laser sputter dust collection device", and the "laser processing method" can be regarded as a "laser sputter dust collection method".

Here, the steel sheet to which the laser processing device according to the present embodiment is used is not particularly limited, and the laser processing device according to the present embodiment can be applied to various known steel sheets. Furthermore, the processing using the laser light to be focused on in the present embodiment is not particularly defined, and the laser processing device according to the present embodiment can be applied to various known processing using the laser light, which is performed at an arbitrary timing of a manufacturing process for manufacturing various steel sheets.

As schematically illustrated in Figs. 1A and 1B, the laser processing device 1 according to the present embodiment includes a laser light source unit 10, a first nozzle 20, and a dust collection mechanism unit 30. The operating states of the laser light source unit 10, the first nozzle 20, and the dust collection mechanism unit 30 are controlled by, for example, various computers (not illustrated) such as a process computer that integrally controls the manufacturing process of the steel sheet.

As schematically illustrated in Figs. 1A and 1B, the laser processing device 1 according to the present embodiment is installed, for example, between adjacent conveyance rolls R provided with predetermined spacings along a conveyance direction C of a steel sheet S.

### < Laser light source unit 10 >

The laser light source unit 10 according to the present embodiment irradiates the surface of the steel sheet S to be processed with laser light LB having a predetermined wavelength. The laser light LB can be scanned along a sheet width direction of the steel sheet S or along a direction slightly inclined with respect to the sheet width direction in plan view. The sheet width direction of the steel sheet S is a direction orthogonal to the conveyance direction C of the steel sheet S and passing through the paper sheets of Figs. 1A and 1B.

Note that, in the present disclosure, scanning of the laser light as linear irradiation is not essential, and the laser light may be applied in a point shape. The laser light source unit 10 includes a laser light source (not illustrated) for irradiating the laser light LB having a wavelength and intensity necessary for realizing the process of interest, and an optical system (not illustrated) for guiding the laser light LB irradiated from the laser light source to a surface of the steel sheet S.

The laser light source is not particularly limited, and various laser light sources such as various solid-state laser light sources, gas laser light sources, and semiconductor laser light sources can be used. Furthermore, the optical system is not particularly limited, and various optical systems for guiding the laser light LB to the surface of the steel sheet S can be used.

An installation position of the laser light source unit 10 as described above is not particularly limited, but for example, as schematically illustrated in Figs. 1A and 1B, it is preferable that the laser light source unit is provided above the steel sheet S in a vertical direction such that an irradiation optical axis of the laser light LB is substantially perpendicular to the surface of the steel sheet S when viewed from a side-surface.

### < First nozzle 20 >

As illustrated in Figs. 1A and 1B, the first nozzle 20 is provided as a gas injection portion below the laser light source unit 10. A nozzle outlet of the first nozzle 20 opens toward the steel sheet S. In the present embodiment, the laser light LB can be irradiated through the nozzle outlet of the first nozzle 20. Note that the first nozzle 20 may be separately provided at each of a position on an upstream side in the conveyance direction C and a position on a downstream side in the conveyance direction C. Furthermore, the first nozzle 20 may include a plurality of nozzles arranged along the sheet width direction of the steel sheet S.

In the present embodiment, the first nozzle 20 is an air nozzle that injects dry air supplied from an air supply pipe (not illustrated) as an example of gas toward an irradiation site of the laser light LB on the surface of the steel sheet S. In Figs. 1A and 1B, a discharge jet 20A of dry air injected from both the position on the upstream side in the conveyance direction C and the position on the downstream side in the conveyance direction C in an emission unit 12 of the laser light LB in the laser light source unit 10 is illustrated.

The first nozzle 20 is disposed so that the injected dry air overlaps the laser light LB over an entire scanning width of the laser light LB in the sheet width direction of the steel sheet S. Even if laser sputter LS is not affected by a fluid force of the dry air injected from the first nozzle 20 (that is, a force applied from the fluid by the contact with the fluid), the laser sputter LS heated by the energy of the laser from the surface of the steel sheet S and generated by a phase change and thermal expansion is wound up from the surface of the steel sheet. The wound up laser sputter LS is collected by the dust collection mechanism unit 30 along with the flow of air by the dust collection mechanism unit 30 described later.

In the laser processing device 1 according to the present embodiment, instead of using an air knife having a flow velocity that scrapes the laser sputter LS from the inside of the groove on the surface of the steel sheet as disclosed in Japanese National-Phase Publication (JP-A) No. 2019-509394, an air nozzle that injects dry air having a flow velocity smaller than that of the air knife is used. As a result, it is possible to superimpose the laser sputter LS on the flow of air by the dust collection mechanism unit 30 without disturbing the flow of air for collecting dust like an air knife and without disturbing the flow of laser sputter LS emitted from the surface of the steel sheet S.

As a result, it is possible to prevent the laser sputter LS from adhering to the laser processing device 1, particularly to the emission unit 12. On the other hand, the dry air injected by the air knife as disclosed in Japanese National-Phase Publication (JP-A) No. 2019-509394 arrives at the groove and blows off the sputter inside the groove. Therefore, the blown laser sputter LS adheres to the laser processing device including the emission unit 12.

An installation position of the first nozzle 20 is not particularly limited as long as it is a position where dry air can be injected onto the surface of the steel sheet S. However, as illustrated in Figs. 1A and 1B, the first nozzle 20 is preferably provided immediately above the steel sheet S. Furthermore, the first nozzle 20 is more preferably provided parallel to the optical axis direction of the laser light LB such that a nozzle main axis direction of the first nozzle 20, in other words, a traveling direction of the dry air to be injected is substantially coaxial with the optical axis direction of the laser light LB in the laser light source unit 10. The dry air illustrated in Figs. 1A and 1B is injected toward the surface of the steel sheet S so as to be substantially orthogonal to the surface of the steel sheet S parallel to the optical axis direction of the laser light LB.

Here, in the present embodiment, an injection amount of the dry air injected from the first nozzle 20 is preferably less than or equal to a suction amount of the dust collection mechanism unit 30 described later. By injecting dry air with an injection amount less than or equal to a suction amount of the dust collection mechanism unit 30, it is possible to more reliably suppress the dry air from the first nozzle 20 from disturbing the flow of air for sucking the laser sputter LS while winding up the laser sputter LS from the surface of the steel sheet S.

Therefore, the dust collection efficiency of the laser sputter LS can be more reliably improved. It is more preferable to more finely control the injection amount of dry air injected from the first nozzle 20. Note that, in the present disclosure, the injection amount of the dry air is not limited to the suction amount or less of the dust collection mechanism unit, and can be arbitrarily changed.

Furthermore, a discharge air speed of the dry air injected from the first nozzle 20 is preferably set to a value less than or equal to a suction flow velocity by the dust collection mechanism unit 30 described later. By setting the discharge air speed of the dry air to a discharge flow velocity less than or equal to the suction flow velocity by the dust collection mechanism unit 30, it is possible to further improve the dust collection efficiency by the dust collection mechanism unit 30 described later. Note that, in the present disclosure, the discharge air speed of the dry air is not limited to the suction flow velocity or less of the dust collection mechanism unit, and can be arbitrarily changed.

A specific example of the first nozzle 20 that injects dry air in the above-described state is not particularly limited, and various known air injection nozzles can be used as long as the above-described state can be realized. Examples of the air injection nozzle of the present disclosure include various slit nozzles.

Furthermore, the gas injected from the first nozzle 20 is not limited to the dry air as described above, and may be nitrogen, argon, carbon dioxide, helium, or the like.

### < Dust collection mechanism unit 30 >

The dust collection mechanism unit 30 is a mechanism that collects the laser sputter LS floating in the vicinity of the irradiation site of the laser light LB by the injection of dry air by the first nozzle 20. The dust collection mechanism unit 30 has an appearance constituted by, for example, a dust collecting hood or the like having a dust collection port for collecting the laser sputter LS, and includes a dust collection flow path (not illustrated) for sucking the laser sputter LS and a suction pump P provided at the dust collection flow path.

The dust collection mechanism unit 30 is configured to suck the atmosphere around the dust collection port with a predetermined suction amount, and collects the laser sputter LS floating in the vicinity of the irradiation site of the laser light LB from the dust collection port by the suction operation. Here, the specific configuration of the dust collection mechanism unit 30 is not particularly limited, and various known mechanisms can be appropriately used.

Furthermore, in the present disclosure, the number of dust collection mechanism units is not limited to one, and may be plural. For example, in Figs. 1A and 1B, a plurality of the dust collection mechanism units may be disposed along the vertical direction on at least one of the upstream side or the downstream side of the emission unit 12 of the laser processing device 1. Furthermore, the plurality of dust collection mechanism units may be disposed along the sheet width direction.

In the laser processing device 1 according to the present embodiment, as schematically illustrated in Figs. 1A and 1B, the dust collection mechanism unit 30 is provided only at any one of the upstream side of the irradiation site of the laser light LB in Fig. 1A and the downstream side of the irradiation site of the laser light LB in Fig. 1B in the conveyance direction C of the steel sheet S. The dust collection mechanism unit 30 is not provided at both the upstream side and the downstream side of the irradiation site of the laser light LB.

In the laser processing device 1 according to the present embodiment, as described above, the dust collection mechanism unit 30 is provided only at the upstream side or only on the downstream side of the irradiation site of the laser light LB, so that it is possible to prevent the flow of air for sucking the laser sputter LS from being stagnant in the vicinity of the irradiation site of the laser light LB, and it is possible to reliably collect the laser sputter LS.

Furthermore, in the laser processing device 1 according to the present embodiment, the dust collection mechanism unit 30 as described above is more preferably provided only at the downstream side of the irradiation site of the laser light LB as schematically illustrated in Fig. 1B. When the steel sheet S to be processed in the present embodiment is conveyed along the conveyance direction C, an air flow (that is, the accompanying flow) from the upstream side to the downstream side in the conveyance direction C is generated. Therefore, by providing the dust collection mechanism unit 30 only on the downstream side of the irradiation site of the laser light LB, it is possible to utilize the accompanying flow, and it is possible to more reliably collect the laser sputter LS.

The suction amount by the dust collection mechanism unit 30 is preferably greater than or equal to the injection amount of dry air from the first nozzle 20. As a result, it is possible to more reliably prevent stagnation of the flow of air around the irradiation site of the laser light LB, and it is possible to more reliably collect the laser sputter LS. Note that, in the present disclosure, the suction amount by the dust collection mechanism unit is not limited to the injection amount or more of the dry air from the first nozzle, and can be arbitrarily changed.

Furthermore, the suction flow velocity by the dust collection mechanism unit 30 is, for example, preferably 15 m/s or more and 50 m/s or less, and more preferably 20 m/s or more and 30 m/s or less. By setting the suction flow velocity to 15 m/s or more and 50 m/s or less, the laser sputter LS can be more reliably collected without disturbing the flow of air around the irradiation site of the laser light LB. In a case where the suction flow velocity is less than 15 m/s, the sputtering suction rate decreases.

Furthermore, in a case where the suction flow velocity exceeds 50 m/s, power consumption increases. Furthermore, in the case where the suction flow velocity exceeds 50 m/s, the negative pressure increases due to suction, so that atmospheric pressure vibration occurs, which may cause problems in the stability of the sheet passage and the stability of the laser device. Note that, in the present disclosure, the suction flow velocity by the dust collection mechanism unit is not limited to 15 m/s or more and 50 m/s or less, and can be arbitrarily changed.

As described above, with the laser processing device 1 according to the present embodiment, it is possible to more efficiently collect the laser sputter LS generated with the irradiation of the laser light LB, and for example, it is possible to more easily realize the dust collection efficiency of 90% or more. Note that a specific definition of the dust collection efficiency will be described later in "Examples".

Furthermore, as a result of further improving the dust collection efficiency of the laser sputter LS, the laser sputter LS arriving at the wall surface of the laser light source unit 10 can also be reduced, and the cleanliness of the laser light source unit 10 and the convenience of maintenance can be further improved. Therefore, in a case where the laser processing device 1 according to the present embodiment is applied to, for example, the magnetic domain control processing of the oriented electromagnetic steel sheet, the generated laser sputter LS can be more reliably collected even in a case where the irradiation power of the irradiated laser light LB is required to be further increased.

### [Installation position of dust collection mechanism unit 30]

Here, the installation position of the dust collection mechanism unit 30 in the laser processing device 1 according to the present embodiment will be described in detail with reference to Fig. 2.

As schematically illustrated in Fig. 2, a case where the laser processing device 1 according to the present embodiment is viewed from the side-surface side of the steel sheet S is set. "Viewed from the side-surface side of the steel sheet S" means that the steel sheet S is viewed along the sheet width direction from the direction in which a thickness of the steel sheet S can be read. Furthermore, in a case where the laser light LB is scanned, "viewed from the side-surface side of the steel sheet S" may mean viewing along a scanning direction.

When the laser processing device 1 is viewed from the side-surface side of the steel sheet S, as illustrated in Fig. 2, a separation distance in the conveyance direction C between the irradiation site of the laser light LB on the steel sheet S and the dust collection port of the dust collection mechanism unit 30 is represented as a distance a. Furthermore, the minimum value of a height from the irradiation site of the laser light LB on the steel sheet S to a lower end of the dust collection port of the dust collection mechanism unit 30 is represented as a distance b.

In the laser processing device 1 according to the present embodiment, the size of the distance a as illustrated in Fig. 2 is preferably 25 mm or less. Since the distance a is 25 mm or less, it is possible to more reliably suppress a decrease in the dust collection force of the laser sputter LS by the dust collection mechanism unit 30 and more reliably prevent the adhesion of the laser sputter LS to the laser light source unit 10 and the first nozzle 20, and it is possible to contribute to improvement in durability of the laser light source unit 10 and the first nozzle 20.

In addition, it is possible to more reliably prevent adhesion of the laser sputter LS to the lower end portion of the dust collection port of the dust collection mechanism unit 30 and the upper surface of the inner wall of the dust collection mechanism unit 30, and it is possible to more reliably suppress clogging of the dust collection mechanism unit 30 and damage to the surface of the steel sheet S due to falling of the laser sputter LS onto the surface of the steel sheet S. The distance a as illustrated in Fig. 2 is more preferably 20 mm. Note that a lower limit value of the distance a is not particularly limited, and depends on a dense state of each facility around the dust collection port, but is substantially about 1 mm.

Furthermore, in the laser processing device 1 according to the present embodiment, the size of the distance b as illustrated in Fig. 2 is preferably 10 mm or less. Since the distance b is 10 mm or less, it is possible to more reliably suppress a decrease in the dust collection force of the laser sputter LS by the dust collection mechanism unit 30 and more reliably prevent the adhesion of the laser sputter LS to the laser light source unit 10 and the first nozzle 20, and it is possible to contribute to improvement in durability of the laser light source unit 10 and the first nozzle 20.

In addition, it is possible to more reliably prevent adhesion of the laser sputter LS to the lower end portion of the dust collection port of the dust collection mechanism unit 30 and the upper surface of the inner wall of the dust collection mechanism unit 30, and it is possible to more reliably suppress clogging of the dust collection mechanism unit 30 and damage to the surface of the steel sheet S due to falling of the laser sputter LS onto the surface of the steel sheet S. The distance b as illustrated in Fig. 2 is more preferably 5 mm. Note that a lower limit value of the distance b is not particularly limited, and depends on a dense state of each facility around the dust collection port, but is substantially about 1 mm.

Furthermore, in the laser processing device 1 according to the present embodiment, it is still more preferable that the size of the distance a is 25 mm or less and the size of the distance b is 10 mm or less as illustrated in Fig. 2. As a result, the dust collection efficiency of the laser sputter LS by the dust collection mechanism unit 30 can be more reliably set to 90% or more, and as a result, the effect of improving the durability of the laser light source unit 10 and the first nozzle 20 as described above and the effect of suppressing the damage of the surface of the steel sheet S due to the clogging of the dust collection mechanism unit 30 and the falling of the laser sputter LS onto the surface of the steel sheet S can be more reliably exhibited.

Note that, in the present disclosure, a plurality of the laser light source units may be installed in the sheet width direction with respect to one steel sheet, and a plurality of the dust collection mechanism units corresponding to the plurality of installed laser light source units may be installed. Furthermore, the plurality of laser light source units and the dust collection mechanism unit corresponding to each laser light source unit may be arranged so as to intersect with the sheet width direction in plan view.

### [Dust collection operation]

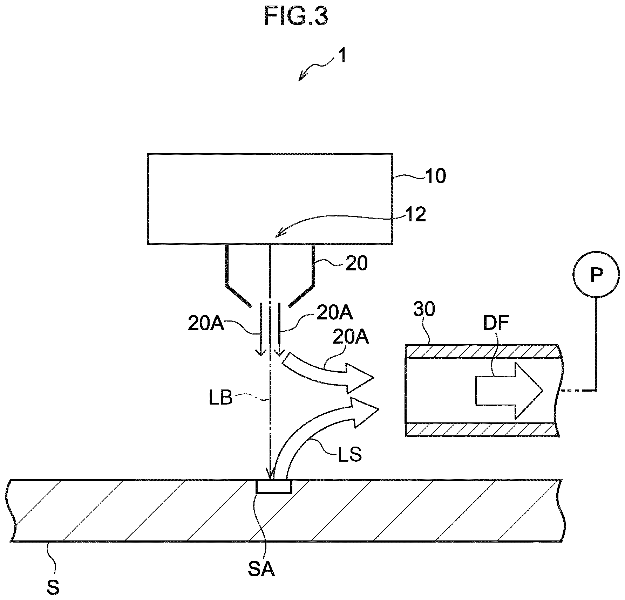

Next, the operation of dust collection in the laser processing device 1 according to the present embodiment will be described with reference to Figs. 3 to 6. The laser processing device 1 according to the present embodiment in Fig. 3 corresponds to the laser processing device 1 according to the present embodiment in Fig. 1B.

As illustrated in Fig. 3, in the present embodiment, the laser light LB is applied to the steel sheet S through the nozzle outlet of the first nozzle 20. The discharge jet 20A from the first nozzle 20 is directed from a position in the vicinity of the emission unit 12 to an irradiation site SA of the laser light LB on the surface of the steel sheet S parallel to the optical axis of the laser light LB. In the present embodiment, the discharge jet 20A that does not arrive at the irradiation site SA diffuses toward the outside of the optical axis, that is, the outside in the nozzle main axis direction along the surface of the steel sheet S between the first nozzle 20 and the steel sheet S. The discharge jet 20A from the first nozzle 20 is sufficiently guided to a suction airflow DF of the dust collection mechanism unit 30. Furthermore, in the present embodiment, the discharge jet 20A injected from the first nozzle 20 parallel to the optical axis direction flows along the flow of the suction airflow DF of the dust collection mechanism unit 30 to be straightened. Therefore, it is difficult to generate a low pressure portion that guides the laser sputter LS to the first nozzle 20.

The flow of the discharge jet 20A toward the irradiation site SA and the flow of the discharge jet 20A toward the outside in the nozzle main axis direction prevent the laser sputter LS from adhering to the emission unit 12 of the laser light source unit 10. Furthermore, since the discharge jet 20A is directed to the outside of the optical axis, the laser sputter LS inside the groove of the irradiation site SA is less likely to be scattered by the discharge jet 20A. Furthermore, the discharge jet 20A directed toward the outside of the optical axis guides the laser sputter LS generated at the irradiation site SA to the suction airflow DF.

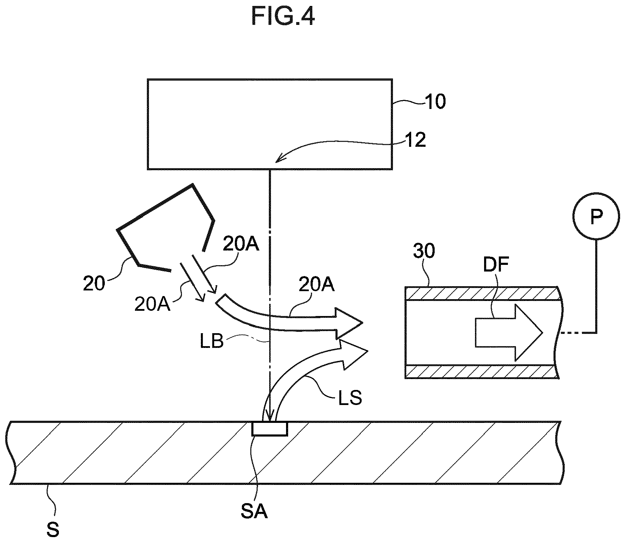

On the other hand, as illustrated in Fig. 4, in the first comparative example, the first nozzle 20 is not attached to the lower portion of the laser light source unit 10, and is provided at a position away from the emission unit 12 on the left side of the optical axis of the laser light LB. Therefore, the discharge jet 20A from the first nozzle 20 is not parallel to the optical axis of the laser light LB, but is directed to the irradiation site SA of the laser light LB on the surface of the steel sheet S in a state of intersecting the optical axis. Alternatively, a low pressure portion is generated by the discharge jet 20A from the first nozzle 20, and the laser sputter LS is guided to the first nozzle 20.

Also in the first comparative example, similarly to the case of the present embodiment, the discharge jet 20A that does not arrive at the irradiation site SA diffuses toward the outside in the nozzle main axis direction along the surface of the steel sheet S between the first nozzle 20 and the steel sheet S. However, since the discharge jet 20A is not formed in the vicinity of the emission unit 12 of the laser light source unit 10, the effect of preventing adhesion of the laser sputter LS to the emission unit 12 is smaller than that of the present embodiment.

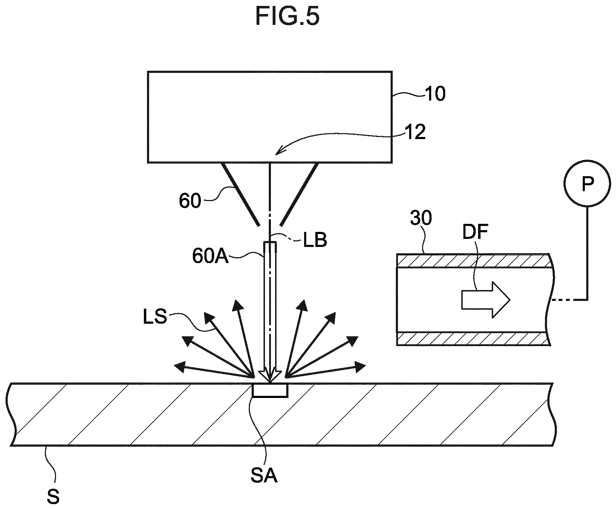

Furthermore, as illustrated in Fig. 5, in the second comparative example, the laser light LB is applied to the steel sheet S through a nozzle outlet of an air knife 60. A discharge jet 60A from the air knife 60 is directed from a position in the vicinity of the emission unit 12 to the irradiation site SA of the laser light LB on the surface of the steel sheet S parallel to the optical axis of the laser light LB. In the second comparative example, due to the discharge jet 60A arriving at the irradiation site SA, the laser sputter LS generated at the irradiation site SA vigorously scatters substantially radially from the irradiation site SA. The scattered laser sputter LS is not sufficiently guided to the suction airflow DF of the dust collection mechanism unit 30. Furthermore, the laser sputter LS is likely to adhere to the emission unit 12 of the laser light source unit 10. Alternatively, a low pressure portion is generated by the discharge jet 60A from the air knife 60, and the laser sputter LS is guided to the first nozzle 20.

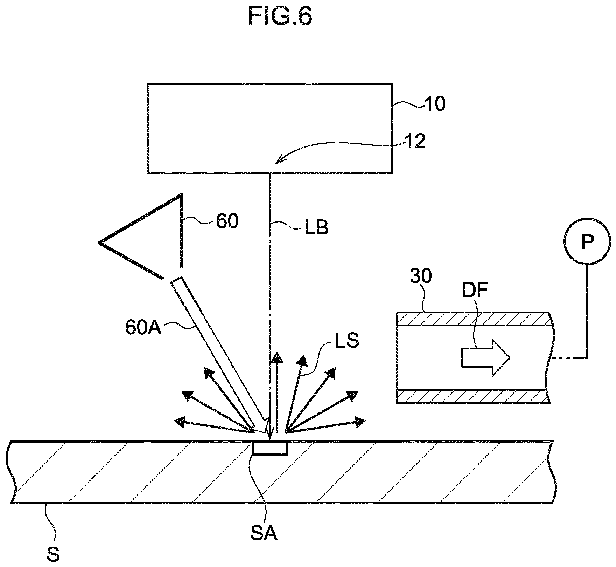

Furthermore, as illustrated in Fig. 6, in the third comparative example, the air knife 60 is provided at a position away from the emission unit 12 on the left side of the optical axis of the laser light LB without being attached to the lower portion of the laser light source unit 10. Therefore, the discharge jet 60A from the air knife 60 is not parallel to the optical axis of the laser light LB, but is directed to the irradiation site SA of the laser light LB on the surface of the steel sheet S in a state of intersecting the optical axis.

Also in the third comparative example, as in the second comparative example, due to the discharge jet 60A arriving at the irradiation site SA, the laser sputter LS generated at the irradiation site SA vigorously scatters substantially radially from the irradiation site SA. Similarly to the second comparative example, the scattered laser sputter LS is not sufficiently guided to the suction airflow DF of the dust collection mechanism unit 30. Furthermore, a low pressure portion is generated by the discharge jet 60A from the air knife 60, and as a result, the laser sputter LS is likely to adhere to the emission unit 12 of the laser light source unit 10.

### [Shape of dust collection mechanism unit 30]

Next, with reference to Figs. 7A to 7C, the shape of the dust collection mechanism unit in the laser processing device according to the present embodiment when viewed from the side of the steel sheet S will be described in more detail.

In the laser processing device 1 according to the present embodiment, when the laser processing device 1 is viewed from the side-surface side of the steel sheet S, the upper surface of the dust collection mechanism unit 30 preferably has a structure in which a distance from the surface of the steel sheet S, more specifically, a distance from the position of the surface of the steel sheet S at the irradiation site of the laser light LB is increased in a direction in which the laser sputter LS is sucked from the dust collection port.

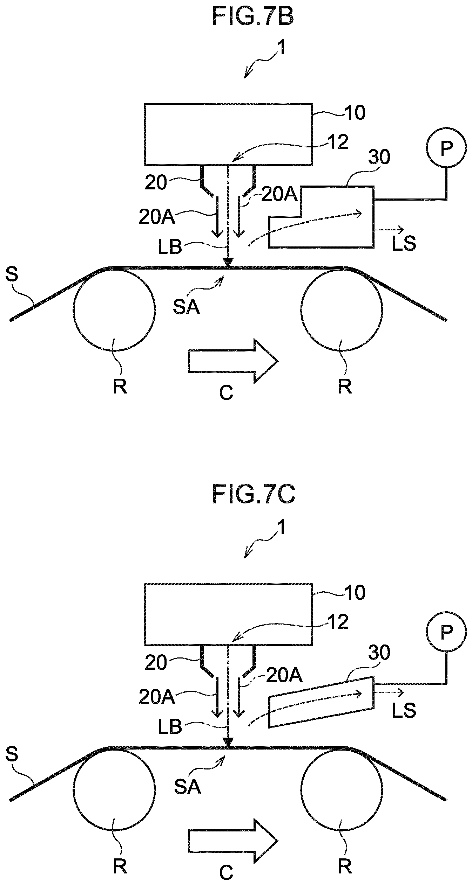

More specifically, for example, as illustrated in Fig. 7A, the internal space of the dust collection mechanism unit 30 may have a structure in which the height of the internal space of the dust collection mechanism unit 30 continuously increases in the direction in which the laser sputter LS is sucked from the dust collection port, for example, a tapered shape. Furthermore, for example, as illustrated in Fig. 7B, the internal space of the dust collection mechanism unit 30 may have a staircase structure in which the height of the internal space of the dust collection mechanism unit 30 gradually increases in the direction in which the laser sputter LS is sucked from the dust collection port.

Furthermore, as illustrated in Fig. 7C, the outer shape of the dust collection mechanism unit 30, more specifically, the outer shape of the dust collecting hood may have a substantially parallelogram shape. At this time, as illustrated in Figs. 7A to 7C, the shape of the bottom surface of the dust collection mechanism unit 30 is not particularly limited as long as it does not obstruct the flow of air, and may be a horizontal plane as illustrated in Figs. 7A and 7B, or may be a shape in which the distance from the surface of the steel sheet S becomes long as illustrated in Fig. 7C.

Since the dust collection mechanism unit 30 has the shape illustrated in Figs. 7A to 7C, the laser sputter LS is collected along the parabolic air flow without inhibiting the parabolic air flow illustrated in Figs. 7A to 7C in the internal space of the dust collection mechanism unit 30. As a result, it is possible to prevent the laser sputter LS from directly hitting the upper inner wall surface in the internal space, and it is possible to more reliably prevent the laser sputter LS from adhering to the inner wall surface.

### [Use of carbon-made plate for dust collection mechanism unit 30]

Furthermore, in the laser processing device 1 according to the present embodiment, as schematically illustrated in Fig. 8, a carbon-made plate may be disposed on the vertical direction upper portion of the inner wall of the dust collection mechanism unit 30. The dust collecting hood constituting the wall surface of the dust collection mechanism unit 30 is generally formed of various metals. In the dust collection mechanism unit 30, the carbon-made plate is disposed at a portion where the collected laser sputter LS can arrive at, so that it is possible to prevent direct reaction between the laser sputter LS and the metal constituting the wall surface, and to prevent adhesion of the laser sputter LS. As a result, it is possible to reduce the number of times of maintenance of the inner wall for removing the attached laser sputter LS.

Note that, although Fig. 8 illustrates a case where the carbon-made plate is provided at the entire upper surface of the dust collection mechanism unit 30, the carbon-made plate may be disposed at least at a portion to which the laser sputter LS can adhere and may not be disposed on the entire upper surface of the dust collection mechanism unit 30. The carbon-made plate can be installed at a portion to which the laser sputter LS can adhere, such as a side-surface of the dust collection mechanism unit 30, in addition to the upper surface of the dust collection mechanism unit 30.

Furthermore, instead of installing the carbon-made plate on the inner wall of the dust collection mechanism unit 30, the wall surface itself of the dust collection mechanism unit 30 may be configured by the carbon-made plate.

### < Rectifying plate 40 >

As schematically illustrated in Figs. 9A and 9B, the laser processing device 1 according to the present embodiment may further include a rectifying plate 40 in addition to the laser light source unit 10, the first nozzle 20, and the dust collection mechanism unit 30 described above. As schematically illustrated in Figs. 9A and 9B, the rectifying plate 40 is provided at a position facing the dust collection port of the laser sputter LS in the dust collection mechanism unit 30.

The rectifying plate 40 is a member provided to more reliably prevent the stagnation of the flow of air in the vicinity of the irradiation site of the laser light LB. The rectifying plate 40 is further provided, so that the flow of air in the vicinity of the irradiation site of the laser light LB can be further stabilized. Furthermore, by providing the rectifying plate 40, the aperture ratio in the vicinity of the irradiation site of the laser light LB is reduced, and as a result, the flow velocity of the flow of air can be increased, and the laser sputter LS can be more reliably collected.

An arrangement direction of the rectifying plate 40 is not particularly limited, and the rectifying plate may be arranged vertically (that is, a direction in which the long side of the rectifying plate 40 illustrated in Fig. 9A is substantially parallel to the vertical direction.) as illustrated in Fig. 9A, or may be arranged horizontally (that is, a direction in which the long side of the rectifying plate 40 illustrated in Fig. 9B is substantially parallel to the horizontal direction.) as illustrated in Fig. 9B. Furthermore, the rectifying plate 40 may be disposed obliquely.

Note that a material and a specific shape of the rectifying plate 40 are not particularly limited, and may be appropriately selected according to an installation environment of the rectifying plate 40 or the like.

### < Second nozzle 50 >

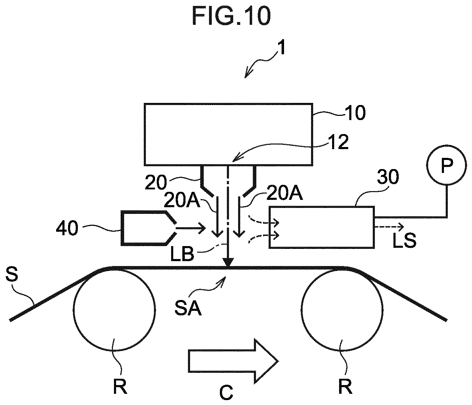

As schematically illustrated in Fig. 10, the laser processing device 1 according to the present embodiment may further include a second nozzle 50 that injects dry air as an example of gas, in addition to the laser light source unit 10, the first nozzle 20, and the dust collection mechanism unit 30 described above. The second nozzle 50 is provided so as to face the dust collection port of the laser sputter LS in the dust collection mechanism unit 30, and injects dry air toward the dust collection port of the dust collection mechanism unit 30. By providing the second nozzle 50, it is possible to more reliably prevent stagnation of the flow of air toward the dust collection mechanism unit 30, and it is possible to more reliably collect the laser sputter LS.

Furthermore, the injection amount of the dry air injected from the second nozzle 50 is more preferably less than or equal to the suction amount of the dust collection mechanism unit 30. By injecting dry air from the second nozzle 50 with an injection amount less than or equal to the suction amount of the dust collection mechanism unit 30, it is possible to more reliably prevent stagnation of the flow of air toward the dust collection mechanism unit 30, and it is possible to more reliably collect the laser sputter LS. It is more preferable to more finely control the injection amount of the dry air injected from the second nozzle 50.

A specific example of the second nozzle 50 that injects dry air in the above-described state is not particularly limited, and various known air injection nozzles can be used as long as the above-described state can be realized. Examples of the air injection nozzle of the present disclosure include various slit nozzles.

Furthermore, the gas injected from the second nozzle 50 is not limited to the dry air as described above, and may be nitrogen, argon, carbon dioxide, helium, or the like.

Note that, in the laser processing device 1 according to the present embodiment, the rectifying plate 40 as illustrated in Figs. 9A and 9B and the second nozzle 50 as illustrated in Fig. 10 can be used in combination.

### < Other modified examples >

In the examples illustrated in Figs. 1A to 10, the case where the laser processing device 1 according to the present embodiment is installed between adjacent conveyance rolls R provided with predetermined spacings along the conveyance direction C of the steel sheet S has been described. However, the installation position of the laser processing device 1 according to the present embodiment is not limited to such a case.

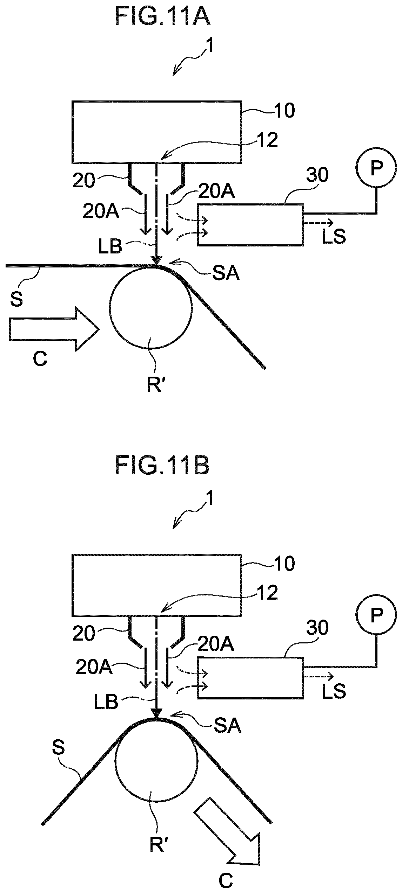

For example, as schematically illustrated in Figs. 11A and 11B, the laser processing device 1 according to the present embodiment may be installed above a roll surface of a steel sheet support roll R' that changes the conveyance direction C of the steel sheet S. Here, Fig. 11A illustrates a case where the laser processing device 1 according to the present embodiment is provided for the steel sheet support roll R' for changing the pass line of the steel sheet S conveyed in the horizontal direction in the oblique direction.

Furthermore, Fig. 11B illustrates a case where the laser processing device 1 according to the present embodiment is provided for the steel sheet support roll R' for changing the pass line of the steel sheet S conveyed obliquely upward to an obliquely downward direction. As described above, the laser processing device 1 according to the present embodiment can be installed at an arbitrary position on a conveyance line on which the steel sheet S is conveyed.

Note that Figs. 11A and 11B illustrate a case where the laser processing device 1 including the laser light source unit 10, the first nozzle 20, and the dust collection mechanism unit 30 is provided, but even in the case illustrated in Figs. 11A and 11B, the laser processing device 1 may further include at least one of the rectifying plate 40 or the second nozzle 50.

### (Laser processing method)

By using the laser processing device according to the present embodiment as described above with reference to Figs. 1A to 11B, it is possible to realize the laser processing method according to the present embodiment as described below. The laser processing method according to the present embodiment is a method of collecting the laser sputter LS, which is dust generated from an irradiation site of the laser light LB due to the laser light LB applied to a surface of the steel sheet.

In the laser processing method according to the present embodiment, the surface of the steel sheet conveyed in the predetermined conveyance direction is irradiated with the laser light LB from the laser light source unit, and dry air as an example of gas is injected from the first nozzle parallel to the optical axis direction of the laser light LB toward the irradiation site of the laser light LB. Then, in the conveyance direction C of the steel sheet, the laser sputter LS is collected from the dust collection port of the dust collection mechanism unit provided only at one of the upstream side or the downstream side of the irradiation site of the laser light LB. By controlling the flow of air in the vicinity of the irradiation site of the laser light LB to a more appropriate state by the laser processing method according to the present embodiment, it is possible to further improve the dust collection efficiency of the laser sputter LS.

### [Examples]

Hereinafter, the laser processing device and the laser processing method according to the present disclosure will be specifically described with reference to Examples and a fourth comparative example. Note that the following examples are merely examples of the laser processing device and the laser processing method according to the present disclosure, and the laser processing device and the laser processing method according to the present disclosure are not limited to the following examples.

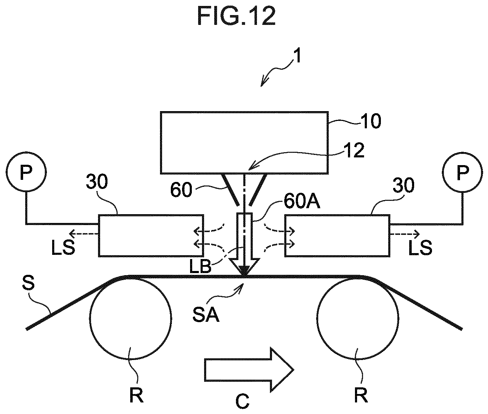

In the present test example, attention was paid to the laser processing device illustrated in Figs. 1B, 9A, and 10 and the device disclosed in Japanese National-Phase Publication (JP-A) No. 2019-509394 having the configuration schematically illustrated in Fig. 12 as a fourth comparative example, and an analysis model corresponding to each device was set. Then, the dust collection efficiency of the laser sputter and the wall surface arrival rate, which is a rate at which the laser sputter arrives at the wall surface of the laser light source unit, were calculated and evaluated by computer simulation using the analysis model.

Note that, the computer simulation was performed using Fluent which is a commercially available numerical calculation software, and it was verified how the dust collection efficiency and the wall surface arrival rate were changed by changing the suction amount of the dust collection mechanism unit from 0 m³/min to 12 m³/min. Furthermore, in the computer simulation, the injection amount of dry air from the first nozzle was constant at 0.02 kg/sec.

Here, the dust collection efficiency was calculated as (the number of particles of laser sputter arriving at the depth of the dust collection flow path provided in the dust collection mechanism unit)/(the number of particles of generated laser sputter). Furthermore, the wall surface arrival rate was calculated as (the number of particles of laser sputter in contact with the wall surface)/(the number of particles of generated laser sputter). Note that, in the computer simulation, it is set that the laser sputter is reflected by the wall surface, and even in the case of the particles that have arrived at the wall surface and come into contact with the wall surface, the particles of the laser sputter that have arrived at the depth of the dust collection flow path are counted as the particles contributing to the dust collection efficiency.

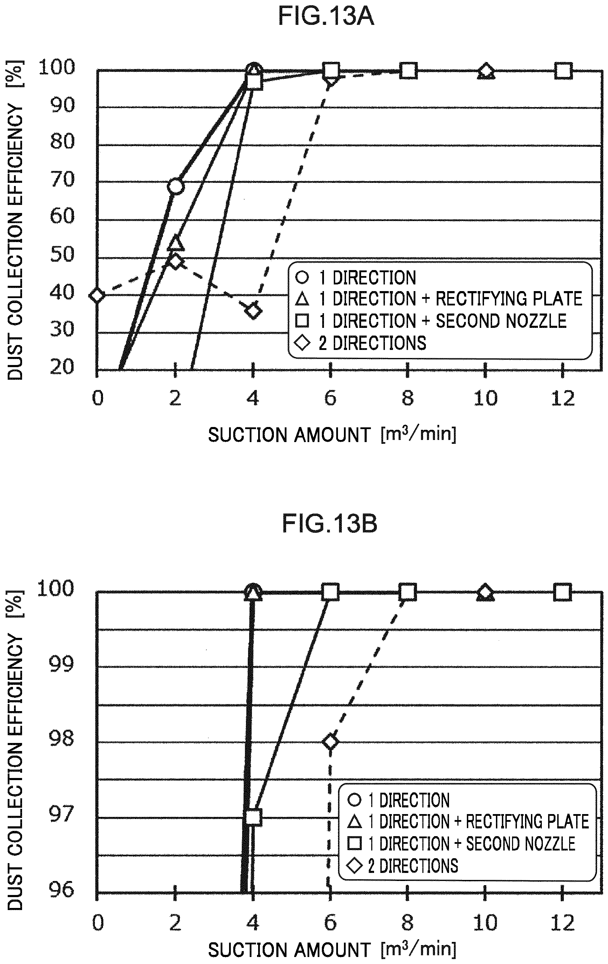

Figs. 13A and 13B illustrate simulation results regarding the dust collection efficiency. In Figs. 13A and 13B, the horizontal axis represents the suction amount of the dust collection mechanism unit, and the vertical axis represents the dust collection efficiency. Furthermore, Fig. 13B is an enlarged view of a part of Fig. 13A. Note that, in Figs. 13A and 13B, a plot indicated by "o" is the result of the laser processing device illustrated in Fig. 1B, a plot indicated by "Δ" is the result of the laser processing device illustrated in Fig. 9A, a plot indicated by "□" is the result of the laser processing device illustrated in Fig. 10, and a plot indicated by "◊" is the result of the laser processing device according to the fourth comparative example illustrated in Fig. 12.

As illustrated in Fig. 13A, it can be seen that the laser processing device corresponding to the example of the present disclosure exhibits superior dust collection efficiency to the laser processing device corresponding to the fourth comparative example of the present disclosure in the region where the suction amount of the dust collection mechanism unit is 2 m³/min or more. Furthermore, as is apparent from Fig. 13B, in any laser processing device, the dust collection efficiency is 100% in the region where the suction amount is 8 m³/min or more. From this result, it can be seen that in the laser processing device corresponding to the fourth comparative example of the present disclosure, sufficient dust collection cannot be performed unless the suction amount is set to 6 m³/min or more, whereas in the laser processing device corresponding to the example of the present disclosure, excellent dust collection efficiency is exhibited with a smaller suction amount.

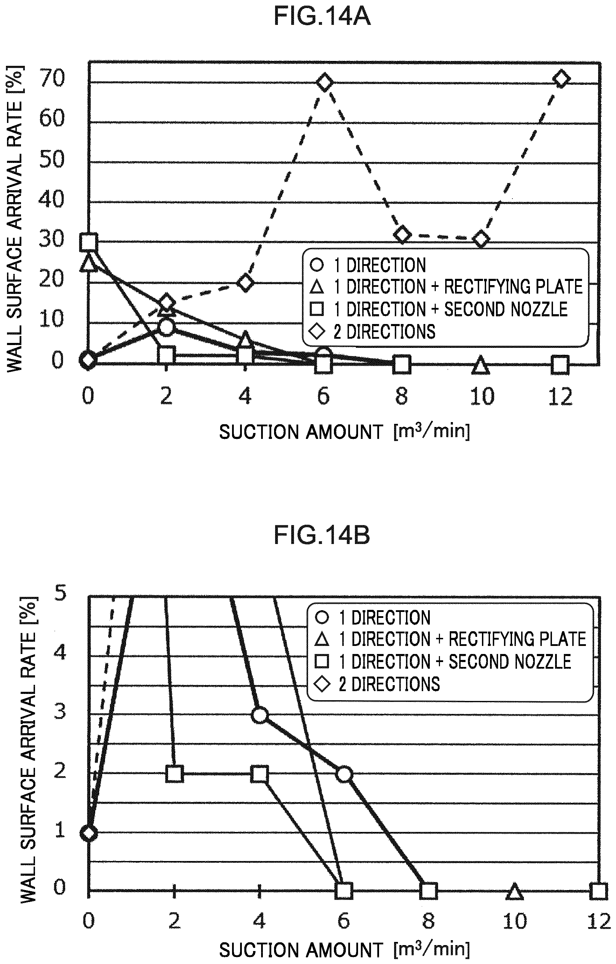

Figs. 14A and 14B illustrate simulation results regarding a wall surface adhesion rate. In Figs. 14A and 14B, the horizontal axis indicates the suction amount of the dust collection mechanism unit, and the vertical axis indicates the wall surface adhesion rate. Furthermore, Fig. 14B is an enlarged view of a part of Fig. 14A. Note that, in Figs. 14A and 14B, a plot indicated by "o" is the result of the laser processing device illustrated in Fig. 1B, a plot indicated by "Δ" is the result of the laser processing device illustrated in Fig. 9A, a plot indicated by "□" is the result of the laser processing device illustrated in Fig. 10, and a plot indicated by "◊" is the result of the laser processing device according to the fourth comparative example illustrated in Fig. 12.

As illustrated in Figs. 14A and 14B, the laser processing device corresponding to the example of the present disclosure exhibits an excellent wall surface arrival rate, and as is clear from Fig. 14A, in the laser processing device corresponding to the fourth comparative example of the present disclosure, the wall surface arrival rate also increases as the suction amount increases.

Next, an analysis model corresponding to the laser processing device 1 illustrated in Fig. 7B was set. Then, the positional relationship between the irradiation site of the laser light LB and the dust collection mechanism unit and the relationship between the discharge flow velocity of the dry air from the first nozzle and the suction flow velocity of the dust collection mechanism unit were verified by computer simulation using Fluent, which is commercially available numerical calculation software, using the analysis model.

In the computer simulation, the dust collection efficiency of the laser sputter was calculated as (the number of particles of the laser sputter arriving at the depth of the dust collection flow path provided in the dust collection mechanism unit)/(the number of particles of the generated laser sputter). The steel sheet arrival rate of laser sputter was calculated as (the number of particles of laser sputter in contact with the steel sheet)/(the number of particles of generated laser sputter). The first nozzle arrival rate of laser sputter was calculated as (the number of particles of laser sputter in contact with the first nozzle)/(the number of particles of generated laser sputter). The wall surface arrival rate indicating a rate at which the laser sputter arrived at the wall surface of the dust collection mechanism unit was calculated as (the number of particles of the laser sputter in contact with the wall surface of the dust collection mechanism unit mechanism unit)/(the number of particles of the generated laser sputter). Note that, in the computer simulation, the laser sputter is set to be reflected by the wall surface, and even in the case of the particles that have reached the wall surface and come into contact with the wall surface, the particles of the laser sputter that have reached the depth of the dust collection flow path are counted as the particles contributing to the dust collection efficiency.

First, the distance a (that is, the separation distance in the conveyance direction C between the irradiation site of the laser light LB on the steel sheet S and the dust collection port of the dust collection mechanism unit 30) illustrated in Fig. 2 was fixed to 20 mm, and then the distance b (that is, the minimum value of the height from the irradiation site of the laser light LB on the steel sheet S to the lower end of the dust collection port of the dust collection mechanism unit 30) illustrated in Fig. 2 was changed to 1 mm, 3 mm, 5 mm, 7 mm, and 10 mm to verify the behavior of the steel sheet arrival rate and the wall surface arrival rate. At this time, the discharge air speed of the dry air injected from the first nozzle was 20 m/sec, and the suction flow velocity of the dust collection mechanism unit was 30 m/sec. Each of the obtained arrival rates was evaluated on the basis of the following evaluation criteria. The obtained results are illustrated in Table 1 below.

### <Steel sheet arrival rate, wall surface arrival rate: Evaluation criteria>

Score A: The value of each arrival rate is less than 1%
Score B: The value of each arrival rate is 1% or more and 50% or less
Score C: The value of each arrival rate is more than 50%

**[Table 1]**

| Distance b [mm] | Steel sheet arrival rate | Wall surface arrival rate |
|---|---|---|
| 1 | A | A |
| 3 | A | B |
| 5 | A | B |
| 7 | C | C |
| 10 | C | C |

As is clear from Table 1 above, by setting the distance b to 5 mm or less, the steel sheet arrival rate and the wall surface arrival rate were 50% or less. Furthermore, by setting the distance b to 1 mm, both the steel sheet arrival rate and the wall surface arrival rate were less than 1%. Furthermore, verification was also performed in a case where the shape of the internal space of the dust collection mechanism unit was changed separately. Specifically, the distance a was set to 20 mm, and the distance b was set to each of 1 mm, 3 mm, 5 mm, 7 mm, and 10 mm. As a result, when b = 5 mm or less, both the steel sheet arrival rate and the wall surface arrival rate can be made less than 1%.

Next, in the laser processing device illustrated in Fig. 7B, after the distance b illustrated in Fig. 2 was fixed to 5 mm, the distance a illustrated in Fig. 2 was changed to 20 mm, 25 mm, 30 mm, and 40 mm, and behavior of the dust collection efficiency and the steel sheet arrival rate was verified. At this time, the discharge air speed of the dry air injected from the first nozzle was 20 m/sec, and the suction flow velocity of the dust collection mechanism unit was 30 m/sec. The obtained dust collection efficiency and steel sheet arrival rate were evaluated based on evaluation criteria. The evaluation criteria of the steel sheet arrival rate are as described above. Furthermore, evaluation criteria of the dust collection efficiency are as follows. The obtained results are illustrated in Table 2 below.

### < Dust collection efficiency: Evaluation criteria >

Score A: The value of the dust collection efficiency is 99% or more
Score B: The value of the dust collection efficiency is less than 99%

**[Table 2]**

| Distance a [mm] | Dust collection efficiency | Steel sheet arrival rate |
|---|---|---|
| 20 | A | A |
| 25 | A | A |
| 30 | A | C |
| 40 | B | C |

As is apparent from Table 2 above, by setting the distance a to 25 mm or less, both the evaluation results of the dust collection efficiency and the steel sheet arrival rate were rated as "A".

Next, in the laser processing device illustrated in Fig. 7B, after the distance a illustrated in Fig. 2 is set to 20 mm and the distance b is fixed to 5 mm, it was verified what behavior the dust collection efficiency exhibits while changing the discharge air speed of the dry air from the first nozzle and the suction flow velocity of the dust collection mechanism unit. The evaluation criteria are as described above. The obtained results are illustrated in Table 3 below.

**[Table 3]**

| Discharge air speed [m/s] | Suction flow velocity [m/s] | Dust collection efficiency |
|---|---|---|
| 20 | 50 | A |
| 20 | 30 | A |
| 20 | 20 | A |
| 20 | 15 | B |
| 20 | 10 | B |
| 1 | 50 | A |
| 1 | 30 | A |
| 1 | 20 | A |
| 1 | 15 | B |
| 1 | 10 | B |

As is apparent from Table 3 above, it has become clear that the dust collection efficiency can be set to 99% or more by appropriately controlling the discharge air speed of the dry air from the first nozzle and the suction flow velocity by the dust collection mechanism unit.

The preferred embodiments of the present disclosure have been described in detail above with reference to the accompanying drawings, but the present disclosure is not limited to such examples. It is obvious that a person having ordinary knowledge in the technical field to which the present disclosure belongs can conceive various changes or modifications within the scope of the technical idea described in the claims, and it is naturally understood that these also belong to the technical scope of the present disclosure.

### < < Supplementary note > >

From the present specification, the following aspects are conceptualized.

That is, Aspect 1 is
a laser processing device including:
a laser light source unit that irradiates, with laser light, a surface of a steel sheet conveyed in a predetermined conveyance direction;
a first nozzle that injects gas toward an irradiation site of the laser light, parallel to an optical axis direction of the laser light; and
a dust collection mechanism unit that is provided only at one of an upstream side or a downstream side of the irradiation site, in the conveyance direction, and that collects, from a dust collection nort, laser sputter generated from the irradiation site.

Aspect 2 is
the laser processing device according to Aspect 1, in which
an injection amount of the gas injected from the first nozzle is less than or equal to a suction amount of the dust collection mechanism unit.

Aspect 3 is
the laser processing device according to Aspect 1 or 2, in which
the dust collection mechanism unit is installed only on the downstream side in the conveyance direction.

Aspect 4 is
the laser processing device according to any one of Aspects 1 to 3, in which
when the laser processing device is viewed from a side-surface side of the steel sheet, a separation distance in the conveyance direction between the irradiation site of the laser light on the steel sheet and the dust collection port of the dust collection mechanism unit is 25 mm or less.

Aspect 5 is
the laser processing device according to any one of Aspects 1 to 4, in which
when the laser processing device is viewed from a side-surface side of the steel sheet, a minimum value of a height from the irradiation site of the laser light on the steel sheet to a lower end of the dust collection port of the dust collection mechanism unit is 10 mm or less.

Aspect 6 is
the laser processing device according to any one of Aspects 1 to 5, further including
a rectifying plate provided so as to face the dust collection port of the laser sputter in the dust collection mechanism unit.

Aspect 7 is
the laser processing device according to any one of Aspects 1 to 6, further including
a second nozzle that is provided so as to face the dust collection port of the laser sputter in the dust collection mechanism unit and that injects gas toward the dust collection port.

Aspect 8 is
the laser processing device according to Aspect 7, in which
an injection amount of the gas injected from the second nozzle is less than or equal to a suction amount of the dust collection mechanism unit.

Aspect 9 is
the laser processing device according to any one of Aspects 1 to 8, in which
a suction flow velocity by the dust collection mechanism unit is 15 m/s or more and 50 m/s or less.

Aspect 10 is
the laser processing device according to any one of Aspects 1 to 9, in which
when the laser processing device is viewed from a side-surface side of the steel sheet, an upper surface of the dust collection mechanism unit has a structure in which a distance from a surface of the steel sheet increases in a direction in which the laser sputter is sucked from the dust collection port.

Aspect 11 is
the laser processing device according to any one of Aspects 1 to 10, in which
a carbon-made plate is disposed on a vertical direction upper portion of an inner wall of the dust collection mechanism unit.

Aspect 12 is
the laser processing device according to any one of Aspects 1 to 11, in which
a wall surface of the dust collection mechanism unit is configured of a carbon-made plate.

Aspect 13 is
the laser processing device according to any one of Aspects 1 to 12, in which
the laser processing device is installed between adjacent conveyance rolls provided with a predetermined spacing along the conveyance direction.

Aspect 14 is
the laser processing device according to any one of Aspects 1 to 12, in which
the laser processing device is installed above a roll surface of a steel sheet support roll that changes the conveyance direction.

Aspect 15 is
a laser processing method including:
irradiating, with laser light from a laser light source unit, a surface of a steel sheet conveyed in a predetermined conveyance direction, and injecting gas from a first nozzle toward an irradiation site of the laser light, parallel to an optical axis direction of the laser light; and
collecting laser sputter generated from the irradiation site from a dust collection port of a dust collection mechanism unit provided only at one of an upstream side or a downstream side of the irradiation site, in the conveyance direction.

### < < Other aspects > >

Furthermore, the following other aspects are conceptualized from the present specification.

That is, Another Aspect 1 is
a laser sputter dust collection device that collects laser sputter being dust generated from an irradiation site of laser light due to the laser light irradiated to a surface of a steel sheet, the laser sputter dust collection device including:
a laser light source unit that irradiates, with the laser light, the surface of the steel sheet conveyed in a predetermined direction;
an air nozzle that injects gas to the irradiation site of the laser light; and
a dust collection mechanism unit that is provided only at one of an upstream side or a downstream side of the irradiation site of the laser light in a conveyance direction of the steel sheet, and collects the laser sputter from a dust collection port.

Another Aspect 2 is
the laser sputter dust collection device according to Another Aspect 1, in which an injection amount of the gas injected from the air nozzle is less than or equal to a suction amount of the dust collection mechanism unit.

Another Aspect 3 is
the laser sputter dust collection device according to Another Aspect 1 or 2, in which the dust collection mechanism unit is installed only on the downstream side in the conveyance direction of the steel sheet.

Another Aspect 4 is
the laser sputter dust collection device according to any one of Another Aspects 1 to 3, in which when the laser sputter dust collection device is viewed in a plan view from a side-surface side of the steel sheet, a separation distance in the conveyance direction between the irradiation position of the laser light on the steel sheet and the dust collection port of the dust collection mechanism unit is 25 mm or less.

Another Aspect 5 is
the laser sputter dust collection device according to any one of Another Aspects 1 to 4, in which when the laser sputter dust collection device is viewed in a plan view from a side-surface side of the steel sheet, a minimum value of a height from the irradiation position of the laser light on the steel sheet to a lower end of the dust collection port of the dust collection mechanism unit is 10 mm or less.

Another Aspect 6 is
the laser sputter dust collection device according to any one of Another Aspects 1 to 5, in which the air nozzle is provided such that a nozzle main axis direction of the air nozzle is substantially parallel to an optical axis direction of the laser light in the laser light source unit.

Another Aspect 7 is
the laser sputter dust collection device according to any one of Another Aspects 1 to 6, further including a rectifying plate provided so as to face a dust collection port of the laser sputter in the dust collection mechanism unit.

Another Aspect 8 is
the laser sputter dust collection device according to any one of Another Aspects 1 to 7, further including a second nozzle that is provided to face a dust collection port of the laser sputter in the dust collection mechanism unit and injects gas toward the dust collection port.

Another Aspect 9 is
the laser sputter dust collection device according to Another Aspect 8, in which an injection amount of the gas injected from the second nozzle is less than or equal to a suction amount of the dust collection mechanism unit.

Another Aspect 10 is
the laser sputter dust collection device according to any one of Another Aspects 1 to 9, in which a suction flow velocity by the dust collection mechanism unit is 15 m/s or more and 50 m/s or less.

Another Aspect 11 is
the laser sputter dust collection device according to any one of Another Aspects 1 to 10, in which when the laser sputter dust collection device is viewed in a plan view from a side-surface side of the steel sheet, an upper surface of the dust collection mechanism unit has a structure in which a distance from a surface of the steel sheet increases in a direction in which the laser sputter is sucked from the dust collection port.

Another Aspect 12 is
the laser sputter dust collection device according to any one of Another Aspects 1 to 11, in which a carbon-made plate is disposed on a vertical direction upper portion of an inner wall of the dust collection mechanism unit.

Another Aspect 13 is
the laser sputter dust collection device according to any one of Another Aspects 1 to 11, in which the wall surface of the dust collection mechanism unit is configured of a carbon-made plate.

Another Aspect 14 is
the laser sputter dust collection device according to any one of Another Aspects 1 to 13, in which the laser sputter dust collection device is installed between adjacent conveyance rolls provided with a predetermined spacing along the conveyance direction of the steel sheet.

Another Aspect 15 is
the laser sputter dust collection device according to any one of Another Aspects 1 to 13, in which the laser sputter dust collection device is installed above a roll surface of a steel sheet support roll that changes the conveyance direction of the steel sheet.

Another Aspect 16 is
a laser sputter dust collection method of collecting laser sputter being dust generated from an irradiation site of laser light due to the laser light irradiated to a surface of a steel sheet, the laser sputter dust collection method including:
irradiating, with laser light from a laser light source unit, the surface of the steel sheet conveyed in a predetermined direction, and injecting gas from an air nozzle to the irradiation site of the laser light; and
collecting the laser sputter from a dust collection port of a dust collection mechanism unit provided only at one of an upstream side or a downstream side of the irradiation site of the laser light in a conveyance direction of the steel sheet.

According to the other aspects, it is possible to more efficiently collect the laser sputter generated with the irradiation of the laser light.

The disclosure of Japanese Patent Application No. 2021-120919 filed on July 21, 2021 is incorporated herein by reference in its entirety.

Furthermore, all documents, patent applications, and technical standards described in this specification are incorporated herein by reference to the same extent as if each document, patent application, and technical standard were specifically and individually described to be incorporated by reference.

- 1: Laser processing device
- 10: Laser light source unit
- 12: Emission unit
- 20: First nozzle
- 20A: Discharge jet
- 30: Dust collection mechanism unit
- 40: Rectifying plate

- 50: Second nozzle
- 60: Air knife
- 60A: Discharge jet
- C: Conveyance direction
- DF: Suction airflow
- LB: Laser light
- LS: Laser sputter
- P: Suction pump
- R: Conveyance roll
- R': Steel sheet support roll
- S: Steel sheet
- SA: Irradiation site

## Claims

1. A laser processing device comprising:
a laser light source unit that irradiates, with laser light, a surface of a steel sheet conveyed in a predetermined conveyance direction;
a first nozzle that injects gas toward an irradiation site of the laser light, parallel to an optical axis direction of the laser light; and
a dust collection mechanism unit that is provided only at one of an upstream side or a downstream side of the irradiation site, in the conveyance direction, and that collects, from a dust collection port, laser sputter generated from the irradiation site.

2. The laser processing device according to claim 1, wherein an injection amount of the gas injected from the first nozzle is less than or equal to a suction amount of the dust collection mechanism unit.

3. The laser processing device according to claim 1 or 2, wherein the dust collection mechanism unit is installed only on the downstream side in the conveyance direction.

4. The laser processing device according to any one of claims 1 to 3, wherein, when the laser processing device is viewed from a side-surface side of the steel sheet, a separation distance in the conveyance direction between the irradiation site of the laser light on the steel sheet and the dust collection port of the dust collection mechanism unit is 25 mm or less.

5. The laser processing device according to any one of claims 1 to 4, wherein, when the laser processing device is viewed from a side-surface side of the steel sheet, a minimum value of a height from the irradiation site of the laser light on the steel sheet to a lower end of the dust collection port of the dust collection mechanism unit is 10 mm or less.

6. The laser processing device according to any one of claims 1 to 5, further comprising a rectifying plate provided so as to face the dust collection port of the laser sputter in the dust collection mechanism unit.

7. The laser processing device according to any one of claims 1 to 6, further comprising a second nozzle that is provided so as to face the dust collection port of the laser sputter in the dust collection mechanism unit and that injects gas toward the dust collection port.

8. The laser processing device according to claim 7, wherein an injection amount of the gas injected from the second nozzle is less than or equal to a suction amount of the dust collection mechanism unit.

9. The laser processing device according to any one of claims 1 to 8, wherein a suction flow velocity by the dust collection mechanism unit is 15 m/s or more and 50 m/s or less.

10. The laser processing device according to any one of claims 1 to 9, wherein, when the laser processing device is viewed from a side-surface side of the steel sheet, an upper surface of the dust collection mechanism unit has a structure in which a distance from a surface of the steel sheet increases in a direction in which the laser sputter is sucked from the dust collection port.

11. The laser processing device according to any one of claims 1 to 10, wherein a carbon-made plate is disposed on a vertical direction upper portion of an inner wall of the dust collection mechanism unit.

12. The laser processing device according to any one of claims 1 to 10, wherein a wall surface of the dust collection mechanism unit is configured of a carbon-made plate.

13. The laser processing device according to any one of claims 1 to 12, wherein the laser processing device is installed between adjacent conveyance rolls provided with a predetermined spacing along the conveyance direction.

14. The laser processing device according to any one of claims 1 to 12, wherein the laser processing device is installed above a roll surface of a steel sheet support roll that changes the conveyance direction.

15. A laser processing method comprising:
irradiating, with laser light from a laser light source unit, a surface of a steel sheet conveyed in a predetermined conveyance direction, and injecting gas from a first nozzle toward an irradiation site of the laser light, parallel to an optical axis direction of the laser light; and
collecting laser sputter generated from the irradiation site from a dust collection port of a dust collection mechanism unit provided only at one of an upstream side or a downstream side of the irradiation site, in the conveyance direction.
